# EUROPÄISCHE PATENTSCHRIFT

(11) **EP 1 683 663 B1**
(45) Veröffentlichungstag und Bekanntmachung des Hinweises auf die Patenterteilung: **17.10.2007**
(21) Anmeldenummer: 05025145.3
(22) Anmeldetag: 17.11.2005
(51) Int. Cl.: B60G 21/055, B60G 3/20

(54) **Radaufhängung für ein Kraftfahrzeug**
Wheel suspension for a motor vehicle
Suspension de roue pour véhicule automobile

(30) Priorität: 25.01.2005 DE 102005003279
(43) Veröffentlichungstag der Anmeldung: 26.07.2006
(73) Patentinhaber: Dr.Ing. h.c. F. Porsche Aktiengesellschaft, 70435 Stuttgart (DE)
(72) Erfinder: Tardy-Tuch, Georg, 71272 Malmsheim (DE); Schulz, Achim, 75223 Niefern-Oeschelbronn (DE)

(56) Entgegenhaltungen:
- DE-A1- 4 242 815
- DE-C- 830 162
- PATENT ABSTRACTS OF JAPAN Bd. 2000, Nr. 09, 13. Oktober 2000 (2000-10-13) -& JP 2000 153705 A (NISSAN MOTOR CO LTD), 6. Juni 2000 (2000-06-06)
- PATENT ABSTRACTS OF JAPAN Bd. 2003, Nr. 08, 6. August 2003 (2003-08-06) -& JP 2003 118345 A (NISSAN MOTOR CO LTD), 23. April 2003 (2003-04-23)
- PATENT ABSTRACTS OF JAPAN Bd. 017, Nr. 008 (M-1350), 7. Januar 1993 (1993-01-07) -& JP 04 238715 A (MAZDA MOTOR CORP), 26. August 1992 (1992-08-26)
- PATENT ABSTRACTS OF JAPAN Bd. 2003, Nr. 04, 2. April 2003 (2003-04-02) & JP 2002 362123 A (NISSAN MOTOR CO LTD), 18. Dezember 2002 (2002-12-18)

## Beschreibung

Die Erfindung bezieht sich auf eine Radaufhängung für ein Kraftfahrzeug nach dem Oberbegriff des Anspruchs 1.

Aus der DE 830 162 ist eine Radaufhängung für ein Kraftfahrzeug mit einem Stabilisator bekannt, der an einem Rahmen gelagert ist und endseitig am freien Ende jeweils mit einem Gehänge verbunden wird, das sich in axialer Richtung an elastischen Anschlägen abstützt.

Weiterhin offenbart das Dokument DE 4242815 eine Radaufhängung mit einem Stabilisator gemäß dem kennzeichnenden Teil des Anspruchs 1.

Die Aufgabe der Erfindung besteht darin, eine Radaufhängung mit einem Stabilisator zu schaffen, der in seiner Auslenkbewegung bei hohen Kurvengeschwindigkeiten mit großer Seitenkraft und hoher Querbeschleunigung begrenzbar ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass die freien Enden eines Stabilisators, der über eine Koppelstange bzw. ein Gehänge mit einem Federbein oder einer Federbeingabel verbunden ist, in seiner Querbewegung im Fahrbetrieb begrenzt wird, damit keine übermäßigen Kräfte die Koppelstange und auch das Federbein belasten können. Hierzu ist nach der Erfindung insbesondere vorgesehen, dass an einem Gabelelement der Federbeingabel eine Anschlagkonsole angeordnet ist, die eine einem Lagerschraubenkopf oder einer Stirnseite eines Verbindungslagers zugerichtete Anschlagfläche aufweist, welche beabstandet zur Stirnseite oder zum Lagerschraubenkopf angeordnet ist.

Die Anschlagkonsole besteht nach der Erfindung aus einem Winkelblech, das über endseitig der Anschlagkonsole abgestellte Flansche anliegend am Gabelelement angeordnet und mittels Befestigungsschrauben gehalten ist. Die Anschlagkonsole ist in einfacher Weise herstellbar und an vorhandenen Befestigungspunkten der Federbeingabel über Schrauben festsetzbar. So dient eine der Befestigungsschrauben zur Verbindung der Federbeingabel mit einem unteren Radführungslenker gleichzeitig zur Befestigung der Anschlagkonsole. Die weitere Befestigungsschraube ist über vorhandene Bohrungen in der Federbeingabel festsetzbar.

Die Stirnseite des Verbindungslagers oder der Lagerschraubenkopf ist normalerweise beabstandet zur Anschlagfläche der Konsole angeordnet. Nur wenn besonders hohe Belastungen im Fahrbetrieb auftreten, erfolgt eine Abstützung bzw. Begrenzung der Bewegung des freien Endes des Stabilisators. Damit ein geräuschfreies Anschlagen bzw. Abstützen erfolgen kann, weist die Anschlagfläche ein elastisches Abstützmaterial auf, das der Stirnseite oder dem Lagerschraubenkopf zugerichtet ist.

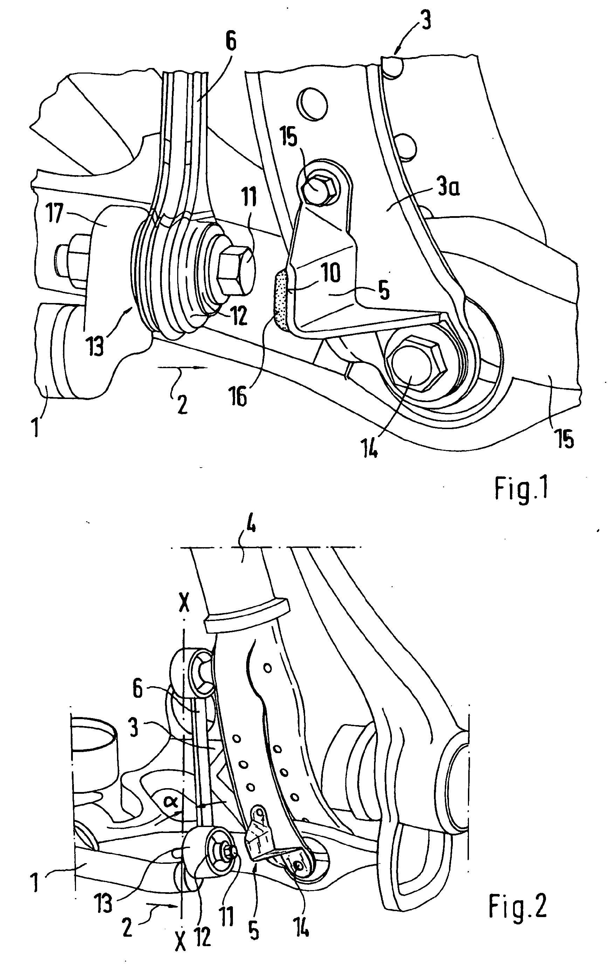

Ein Ausführungsbeispiel der Erfindung ist in den Zeichnungen dargestellt und wird im folgenden näher beschrieben.
Es zeigen
- Fig. 1: eine schaubildliche Darstellung einer Anschlagkonsole an einer Federbeingabel einer Radaufhängung, und
- Fig. 2: eine vergrößerte Darstellung der Anschlagkonsole mit elastischem Anschlag.

Zur Begrenzung einer quergerichteten Auslenkbewegung eines Stabilisators 1 in Pfeilrichtung 2 ist an einem Gabelelement 3a einer Federbeingabel 3 eines Federbeines 4 eine Anschlagkonsole 5 vorgesehen.

Der Stabilisator 1 ist jeweils endseitig mit einer Koppelstange 6 über ein Verbindungslager 7 gelenkig gehalten. Die Koppelstange 6 ist des weiteren über ein Lager 8 am Federbein 4 angelenkt und zu einer vertikalen Längsebene X-X unter einem Winkel α schräg angestellt.

Aufgrund der Einbausituation mit der unter dem Winkel α zu der senkrechten Ebene X-X stehenden Koppelstange 6 ergeben sich aufgrund dieses Winkels der Koppelstange 6 Querkraftanteile, die den Stabilisator 1 aufweiten können. Im Fahrzeug führt dies zu einer instabilen Situation, d.h., mit steigender Koppelstangenkraft vergrößert sich die Verformung am Stabilisator 1 und damit auch die Schrägstellung der Koppelstange 6 und damit des weiteren die Querkräfte, was wiederum die Koppelstange 6 noch weiter neigt und letztendlich die Koppelstange 6 ausknickt und brechen kann.

Damit ein Ausknicken und Brechen der Koppelstange 6 wirksam verhindert wird, ist die Anschlagkonsole 5 mit einer Anschlagfläche 10 versehen, die im Betrieb normalerweise beabstandet zu einem Lagerschraubenkopf 11 oder einer Stirnseite 12 eines Verbindungslagers 13 angeordnet ist.

Die Anschlagkonsole 5 ist winkelförmig ausgeführt, wobei ein etwa senkrecht angestellter Schenkel der Konsole 5 die Anschlagfläche 10 bildet und ein weiterer Schenkel etwa horizontal ausgerichtet ist. An den Schenkeln sind Abstellungen vorgesehen, die Anlagen zum Gabelelement 3a bilden und welche von Befestigungsschrauben 14, 15 zum Festsetzen am Gabelelement 3a durchsetzt sind. Die untere Befestigungsschraube 14 ist gleichzeitig als Lagerschraube zur Verbindung der Federbeingabel 3 mit einem unteren Radführungsglied 15 vorgesehen.

Die Anschlagfläche 10 der Anschlagkonsole 5 kann mit einer elastischen Auflage 16 versehen sein, die einen möglichen Anschlag dämpfen soll und Geräusche minimiert und einen Verschleiß vermeidet.

Bei einem seitlichen Ausweichen des Stabilisatorendes 17 begrenzt die Anschlagkonsole 5 die maximale seitliche Auslenkung, indem der Schraubenkopf 11 zur Anlage an der Anschlagfläche 10 kommt. Somit ist kein permanenter Kontakt zwischen der Anschlagkonsole 5 und dem Stabilisator 1 vorhanden, sondern nur bei bestimmten Fahrmanövern.

Da der Anschlag an dem Fahrwerkselement befestigt wird, an dem auch der Stabilisator 1 über die Koppelstange 6 angebunden ist, wird eine Relativbewegung zwischen dem Stabilisator 1 und der Anschlagkonsole 5 minimiert.

## Patentansprüche

1. Radaufhängung für ein Kraftfahrzeug mit einem Radführungsglied und einem quer im Fahrzeug angeordneten Stabilisator, der an einem Fahrzeugrahmen gelagert und an seinen freien Enden jeweils mit einer Koppelstange gelenkig verbunden ist, die an einer am Radführungsglied abgestützten Federbeingabel eines Federbeinzylinders gelenkig gehalten und schräg zu einer längsverlaufenden Ebene angestellt ist, **dadurch gekennzeichnet, dass** an einem Gabelelement (3a) der Federbeingabel (3) eine Anschlagkonsole (5) angeordnet ist, die eine dem Lagerschraubenkopf (11) oder einer Stirnseite (12) eines Verbindungslagers (13) zugerichtete Anschlagfläche (10) aufweist, welche beabstandet zur Stirnseite (12) oder dem Lagerschraubenkopf (11) angeordnet ist.

2. Radaufhängung nach Anspruch 1, **dadurch gekennzeichnet, dass** die Anschlagkonsole (5) aus einem Winkelblech besteht, das über endseitig der Anschlagkonsole (5) abgestellte Flansche anliegend am Gabelelement (3a) angeordnet und mittels Befestigungsschrauben (14, 15) gehalten ist.

3. Radaufhängung nach den Ansprüchen 1 oder 2, **dadurch gekennzeichnet, dass** die Anschlagfläche (10) der Anschlagkonsole (5) ein elastisches Material (16) aufweist, das der Stirnseite (12) oder dem Lagerschraubenkopf (11) zugerichtet ist.

4. Radaufhängung nach den Ansprüchen 1, 2 oder 3, **dadurch gekennzeichnet, dass** eine Befestigungsschraube (14) zur Verbindung der Federbeingabel (3) mit einem unteren Radführungslenker (15) gleichzeitig zur Befestigung der Anschlagkonsole (5) am Gabelelement (3a) dient.

## Claims

1. A wheel suspension for a motor vehicle with a wheel-control member and a stabilizer which is arranged transversely in the vehicle and which is mounted on a frame of the vehicle and is connected in an articulated manner at its free ends to a coupling rod in each case which is held in an articulated manner on a shock-absorbing leg fork of a shock-absorbing leg cylinder supported on the wheel-control member and is set on in an oblique manner with respect to a longitudinally extending plane, **characterized in that** a stop bracket (5) is arranged on a fork element (3a) of the shock-absorbing leg fork (3), the said stop bracket (5) having a stop face (10) which is directed towards the bearing bolt head (11) or an end face (12) of a connecting bearing (13) and which is arranged at a distance from the end face (12) or the bearing bolt head (11).

2. A wheel suspension according to Claim 1, **characterized in that** the stop bracket (5) consists of an angle sheet which is arranged resting against the fork element (3a) by way of flanges projecting at the end of the stop bracket (5) and which is held by means of fastening bolts (14, 15).

3. A wheel suspension according to Claims 1 or 2, **characterized in that** the stop face (10) of the stop bracket (5) has a resilient material (16) which is directed towards the end face (12) or the bearing bolt head (11).

4. A wheel suspension according to Claims 1, 2 or 3, **characterized in that** a fastening bolt (14) for connecting the shock-absorbing leg fork (3) to a lower wheel-control arm (15) is used at the same time for fastening the stop bracket (5) to the fork element (3a).

## Revendications

1. Suspension de roue pour véhicule automobile avec un organe de direction de roue et un stabilisateur placé transversalement dans le véhicule, qui est placé sur un châssis de véhicule et est relié de manière articulée à une barre de couplage respectivement sur ses extrémités libres, la barre de couplage étant maintenue articulée sur une fourche de jambe de suspension d'un cylindre de jambe de suspension appuyée sur l'organe de direction de roue et est placée en inclinaison par rapport à un plan longitudinal, **caractérisée en ce que** sur un élément de fourche (3a) de la fourche de jambe de suspension (3) une console de butée (5) est placée, laquelle présente une surface de butée (10) dirigée vers la tête de vis de palier (11) ou une face frontale (12) d'un palier de liaison (13), laquelle est placée à distance de la face frontale (12) ou de la tête de vis de palier (11).

2. Suspension de roue selon la revendication 1, **caractérisée en ce que** la console de butée (5) est composée d'une tôle en équerre qui repose sur l'élément de fourche (3a) par une bride posée à l'extrémité de la console de butée (5) et est maintenue à l'aide de vis de fixation (14, 15).

3. Suspension de roue selon les revendications 1 ou 2, **caractérisée en ce que** la surface de butée (10) de la console de butée (5) présente un matériau élastique (16) dirigé vers la face frontale (12) ou la tête de vis de palier (11).

4. Suspension de roue selon les revendications 1, 2 ou 3, **caractérisée en ce qu'**une vis de fixation (14) sert à relier la fourche de jambe de suspension (3) à un organe de direction de roue inférieur (15) et parallèlement à fixer la console de butée (5) sur l'élément de fourche (3a).
